(19)

**Europäisches Patentamt**
**European Patent Office**
**Office européen des brevets**

(11) **EP 4 718 748 A1**

(12) **EUROPEAN PATENT APPLICATION**

(43) Date of publication:
**01.04.2026 Bulletin 2026/14**

(21) Application number: **24306577.8**

(22) Date of filing: **27.09.2024**

(51) International Patent Classification (IPC):
**H04B 10/61** *(2013.01)* **H04B 10/69** *(2013.01)*
**H04B 10/2507** *(2013.01)*

(52) Cooperative Patent Classification (CPC):
**H04B 10/6971; H04B 10/2507; H04B 10/616**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R & D Centre Europe B.V.**
**1119 NS Schiphol Rijk (NL)**
Designated Contracting States:
**FR**

• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventor: **FROC, Gwillerm**
**35708 RENNES (FR)**

(74) Representative: **Cabinet Le Guen Maillet**
**3, impasse de la Vigie**
**CS 71840**
**35418 Saint-Malo Cedex (FR)**

(54) **METHOD FOR CONFIGURING A TRANSCEIVER OPTICAL DEVICE FOR EQUALIZATION-RELATED OPERATIONS**

(57) An equalization optimizer analyzes (S401) successive samples of at least one channel-related parameter Pc so as to determine contribution values of time-reference classes representative of timescales of impact of channel impairments on response of an optical channel. The equalization optimizer determines (S402) a value of at least one equalization-related parameter Pe according to the contribution values of the predetermined time-reference classes and configures (S403) equalization-related operations in accordance. The equalization optimizer reviews (S404) the contribution value of each time-reference class at a rate of the timescale corresponding to the time-reference class in question, and updates (S406) accordingly the at least one equalization-related parameter Pe so that a part thereof which depends on the time-reference class in question is only updated, and the equalization optimizer reconfigures (S407) the equalization-related operations in accordance.

S401 — Analyzing successive samples of at least one channel-related parameter Pc and determining per-class contributions

S402 — Determining a value of at least one equalization-related parameter Pe according to the per-class contributions

S403 — Configuring the transceiver optical device for equalization-related operations

S404 — Reviewing each per-class contribution at a rate of a timescale corresponding to the class in question

S405 — Contribution has changed ? no / yes

S406 — Updating partly the value of the at least one equalization-related parameter Pe

S407 — Reconfiguring the transceiver optical device for the equalization-related operations following update

**Fig. 4**

EP 4 718 748 A1

## Description

TECHNICAL FIELD

The present invention generally relates to optical communications and more particularly to configuring a transceiver optical device for equalization-related operations.

RELATED ART

Optical communications are increasingly used to give network access (typically Internet access) to residential, office or enterprise gateways, or data centers, in the scope of FTTH ("Fiber To The Home") or FTTR ("Fiber To The Room" in the context or industrial PON ("Passive Optical Network") for instance) technology deployments. Optical communications may also be used to ensure mobile infrastructure backhauling for instance in the scope of the deployment of 3G (3rd generation) or 4G (4th generation) mobile technologies using typically Point-to-Point arrangements.

With the emerging 5G (5th generation) mobile technology, fronthauling is about to appear and the needs in terms of data rate capabilities are significantly increased. One may refer to the International Mobile Telecommunications (IMT) recommendations ITU-R M.2083 *"IMT Vision: Framework and overall objectives of the future development of IMT for 2020 and beyond"*, released in September 2015. In such a framework, fronthauling is achieved by moving upstream in the mobile infrastructure processing functions that were previously performed at base stations or nearby in the 3G or 4G mobile technologies. It is referred to as "split options" in the specifications 3GPP TR 38.801 V 14.0.0 "Study on new radio access technology: Radio access architecture and interfaces", released in March 2017 (see more particularly therein Section 11 and Table A-1).

Therefore, 5G mobile technology and industrial PONs have a wider set of requirements as compared to FTTH requirements that have driven optical access technology evolution until now. 5G mobile technology and industrial PONs translate thus into higher nominal data rates, reduced latency and denser deployment, among others.

Furthermore, the Internet of Things, edge computing, Artificial Intelligence, robotics and augmented reality, etc. are technology trends that are highly demanding in terms of communication infrastructures. However, these technology trends have also widely different requirements in terms of data throughputs or quality of services which shall be supported by optical access networks.

Optical access systems shall thus nowadays be able to carry very high data rate throughputs (beyond 50 Gbits/s or even several hundreds of Gbits/s in a near future) as well as very low data rates to carry IoT flows for instance. Optical access networks shall be able to support low latency, as a fraction of one millisecond, for applications such as virtual reality or industrial applications. This requires highly flexible and efficient optical infrastructure.

Due to this variety of applications and corresponding requirements, one may now refer to "optical access and aggregation networks" instead of simply referring to "optical access networks".

It has to be moreover considered that optical lines may have to cope with a constraint of very different lengths, typically from few hundreds of meters to 40 kilometers.

Such a wide variety of requirements and constraints imply difficulties in terms of managing optical signal impairments (for example, optical signal spreading over time) that are of wide variety over time and which induce as a consequence a wide variety of channel responses over time in optical access networks.

First of all, chromatic dispersion varies according to the length of optical lines and further depends on modulated signal bandwidth and on optical signal wavelength. For example, considering a wavelength around 1550 nm, optical signal spreading over time due to chromatic dispersion can vary from a fraction of one symbol period up to 20 symbol periods as the length of the optical line varies from 1 kilometer to 40 kilometers at @3dB, 100 GHz. Furthermore, environmental temperature variations have also a noticeable effect on chromatic dispersion in high bitrate optical communication systems. And it should be noticed that optical access and aggregation networks are typically deployed in a temperature-uncontrolled environment (outdoor, in-ground or in the air). Therefore, optical lines incur vibrations due to wind and vehicles potentially passing by, in addition to the aforementioned temperature variations. Vibrations and temperature variations impact polarization mode dispersion (PMD). Polarization mode dispersion results from a relative delay between both polarization axis in case of an application of anisotropic constraints on the optical lines. This relative delay depends on the root square of the length of the optical lines.

It can be demonstrated that, for an outage probability of $10^{-7}$ (which corresponds to 3 seconds of failure per year), optical signal spreading over time may be six times greater than mean differential group delay (DGD). In optical access and aggregation networks, the mean differential group delay varies with a magnitude that can range over a wide scale, from 0.05 picosecond per $km^{0,5}$ as typically encountered in core networks, up to tens of picoseconds per $km^{0.5}$ in harsh conditions, which is hundreds of times higher than the typical value in core networks. Thus, for an outage probability of $10^{-7}$ and considering a mean differential group delay that can vary from 0.05 ps/$km^{0.5}$ to 10 ps/$km^{0.5}$, the variation of optical signal spreading over time, which encompasses channel impairments, relates to the polarization mode dispersion (PMD) which can vary from a fraction of the symbol period to almost 20 symbol periods for a 30 Gbauds system or even 45 symbol periods considering a 100 Gbauds system.

Another aspect is that, in uncontrolled environments as encountered by optical access and aggregation networks, the nominal wavelength of laser sources or the central wavelength of optical band-pass filters, which prevent from inter-channel cross talk for instance, can shift, especially relatively to each other. Since such kind of devices are located at different geographical places in optical access and aggregation networks deployment, such devices are subject to different environmental conditions, which induce relative wavelength shifts. For example, considering an optical band-pass filter of 100 GHz at 3dB based on Bragg gratings, its time response may spread over 200 picoseconds when a carrier wavelength shifts over the pass band of the optical band-pass filter. It may correspond to a time variation of almost 10 symbol periods for a 30 Gbauds system or even 30 symbol periods considering a 100 Gbauds system.

As can be understood from the foregoing, many physical phenomena impact channel responses in optical access and aggregation networks. Such physical phenomena may have been considered as insignificant in the past, and often considered as not time-dependent, since high needs in terms of data rate capabilities were only considered for core networks with controlled environments, while optical access networks in uncontrolled environments targeted far lower needs in terms of data rate capabilities. Moreover, other channel impairments may impact optical channel spreading, and more generally channel responses, in similar ways as physical phenomena.

Optical access and aggregation networks have now to cope with these channel impairments. Equalization shall therefore be performed. Equalization can be performed in the time domain or in the frequency domain, but it is considered herein that equalization is performed in the time domain. Indeed, equalization in the frequency domain requires that acquired optical signal in the time domain be translated into the frequency domain, e.g., using FFT ("Fast Fourier Transform") on blocks of time domain samples, before any kind of equalization digital processing. Equalization in the frequency domain is therefore intrinsically of significant complexity compared with equalization in the time domain.

Equalization is a signal processing procedure that aims at mitigating inter-symbol interference (ISI) on a communication channel. Equalization is performed on a depth of resources over time, which is called "channel depth" in the art, and which is supposed to contain information useful to compensate optical signal spreading so as to retrieve information as emitted.

For the sake of understanding, considering linear equalization in time domain, an estimation $\hat{I}_k$ of a $k$-th symbol $I_k$ of a transmitted optical signal $I$ which is obtained from equalization over successive received symbol samples $\{v_{k-K} ; v_{k+K}\}$ may be expressed as follows:

$$\hat{I}_k = \sum_{j=-K}^{K} \left( C_j \times v_{k+j} \right)$$

wherein $j$ is an integer varying from $-K$ to $K$, which means that $2K+1$ equalization coefficients $C_j$ are used in conjunction with $2K+1$ symbol samples $v_{k+j}$. Symbols before $j=-K$ and beyond $j=K$ are insignificant for obtaining the estimation $\hat{I}_k$, $2K + 1$ hence representing the channel depth.

Different techniques may be used to determine the equalization coefficients $C_j$ and to update them according to evolution of the communication channel over time. Data-aided schemes that are based on the analysis of dedicated exchanged sequences, or blind equalization techniques as LMS (Least Mean Square) or CMA (Constant Modulus algorithm), which do not need any prior knowledge of channel response to find adequate values of equalization coefficients (which are often referred to as "taps" in equalization in the time domain).

As dimensioning of the optical links, dimensioning of equalization resources needs to be defined according to the worst spreading case that is acceptable according to system specifications. In view of the foregoing, numerous pieces of information have to be retrieved from the channel, numerous samples with potentially high number of resolution bits have to be processed in order to perform equalization in the worst spreading case, which means that numerous equalization coefficients coded over a high number of resolution bits have to be computed, and which further means that numerous computing resources and energy have to be dedicated to optical signal equalization once the equalization coefficients are adequately determined.

Relying on the worst spreading case to operate equalization resources is however not efficient in terms of equalization resources and energy usage.

It is therefore desirable to provide an effective solution in terms of computing resource and energy consumption suitable for optical access and aggregation networks. It is desirable to provide a solution that is simple as possible.

SUMMARY OF THE INVENTION

To that end, it is proposed herein a method for configuring a transceiver optical device in terms of equalization-related operations with respect to optical signals transmitted via a channel of an optical line, the optical signals being subject during transmission over the channel to channel impairments having timescales of impact of said channel impairments on channel response of the channel which can be categorized into corresponding time-reference classes, the method being performed by an equalization optimizer, wherein the method comprises:

- performing an analysis of successive samples of at least one channel-related parameter Pc related to said channel so as to determine a contribution value for each time-reference class among said time-reference classes, wherein the contribution value represents to what extent the channel impairments corresponding to the time-reference class in question contribute to said at least one channel-related parameter Pc;
- determining a value of at least one equalization-related parameter Pe according to the contribution values of the predetermined time-reference classes;
- configuring the transceiver optical device for equalization-related operations with respect to the optical signals transmitted via the channel, using the determined value of the at least one equalization-related parameter.

The method further comprises:

- reviewing the contribution value of each time-reference class at a rate of the timescale corresponding to the time-reference class in question, and updating accordingly the at least one equalization-related parameter Pe so that a part thereof which depends on the time-reference class in question is only updated which leads to a per-class update, and
- reconfiguring the transceiver optical device for the equalization-related operations with respect to the optical signals transmitted via the channel, using the value of the at least one equalization-related parameter Pe after the per-class update.

Thus, thanks to the per-class analysis of the at least one channel-related parameter Pc and the per-class review thereof, at the rate of the timescale corresponding to the time-reference class in question, the updates of the at least one equalization-related parameter Pe can be done only for the parts that concern the time-reference class in question. For example, the updates of equalization coefficients can be done by parts (one part for each class), which can reduce computing resources, such as quantity of coefficients to be solved and depth of the coefficients during resolution of the coefficients in question in an iterative process, and therefore increase speed of convergence of iterative processes such as Constant Modulus Algorithm (CMA).

In a particular embodiment, the contribution value for each class is determined using wavelet transforms, and wherein, for each time-reference class, the equalization optimizer uses at least one wavelet with a timescale matching the timescale of impact on the channel of the physical phenomena represented by the time-reference class in question.

Thus, orthogonal contributions can easily be detected using the wavelet transforms since said wavelet transforms form an orthogonal basis.

In a particular embodiment, the equalization-related operations are among:

- dynamically determining a quantity of hardware blocks of the transceiver optical device usable to perform equalization of the optical signals;
- dynamically determining a set of equalization coefficients, namely post-equalization coefficients;
- dynamically determining a set of pre-equalization coefficients;
- dynamically determining preamble size; and
- dynamically determining margin on the at least one equalization-related parameter Pe.

In a particular embodiment, the equalization optimizer adds a predetermined margin to each determined contribution value, wherein the margin depends on the contribution value to which the margin applies.

In a particular embodiment, the margin is adjusted according to, for at least one time-reference class, quality of service target data representative of outage probability.

In a particular embodiment, the equalization optimizer uses the contribution value for at least one said time-reference class for channel inference with respect to at least one other channel.

Thus, equalization for one channel may benefit from knowledge gathered for another channel with similar conditions.

In a particular embodiment, the channel inference is performed, with respect to any one said time-reference class for the channel, by applying, to the part of the at least one equalization-related parameter Pe which depends on said time-reference class, the same variation as obtained for the part of the at least one equalization-related parameter Pe for said time-reference class with respect to another channel, wherein said another channel is selected by the equalization optimizer according to at least one criterion of similarity between channels.

Thus, the at least one equalization-related parameter Pe can be easily updated by part using information obtained for one or more other channels showing similarities.

In a particular embodiment, the method comprises:

- filling in a first look-up table with values of difference, referred to as $Dc_{x,y}$ between per-class contributions to the at least one channel-related parameter Pc of any channels x and y, with $x \neq y$, among N channels, wherein each value of difference $Dc_{x,y}$ is accompanied by its value of variance $V_{x,y}$; and wherein $Dc_{x,y}$ and $V_{x,y}$ are vectors having as many elements as there exists time-reference classes;
- filling in a second look-up table with values of difference, referred to as $\Delta Pe$, between the value of the at least one equalization-related parameter Pe obtained for the corresponding contribution to the at least one channel-related parameter Pc and the value of the at least one equalization-related parameter Pe obtained for the preceding value corresponding contributions, wherein ΔPe is a vector having also as many elements as there exists time-reference classes;

filling, for each channel among the *N* channels, in a third look-up table by sorting, for each time-reference class, the vectors $Dc_{x,y}$ with $y \neq x$ in sequential order of a score that represents the similarity between channels and that takes into account the variance $V_{x,y}$ for said time-reference class.

In a particular embodiment, when the contribution value for one time-reference class to the at least one channel-related parameter Pc is below a predetermined threshold THc, the equalization optimizer does not take into account said time-reference class when configuring or reconfiguring the transceiver optical device for the equalization-related operations.

Thus, computing resources are preserved.

In a particular embodiment, when the difference in contribution value for one class between two successive reviews of the contribution of said time-reference class to the at least one channel-related parameter Pc is below a predetermined threshold THd, the equalization optimizer does not update the part of the at least one equalization-related parameter Pe which depends on the time-reference class in question.

Thus, when for example actualizing equalization coefficients, the part of the equalization coefficients that are related to the contribution of said time-reference class is not updated and therefore computing complexity is reduced (such as quantity of coefficients to be solved and depth of the coefficients during resolution of the coefficients in question in an iterative process).

In a particular embodiment, the equalization optimizer is located at a central point in an optical communications system, and wherein the aforementioned contributions values are used to perform pre-equalization at the central point end in downstream and post-equalization at the central point in upstream.

Thus, system-wide implementation is made easier since most computing resources are gathered in a single location, which is practically efficient for optical access and aggregation networks.

It is further proposed herein a computer program product comprising instructions causing implementation of the method according to any one of the embodiments presented above, when the instructions are executed by a processor. It is also proposed an information storage medium storing instructions causing implementation of the method according to any one of the embodiments presented above, when the instructions are read from the information storage medium and executed by a processor.

It is further proposed herein an equalization optimizer intended for configuring a transceiver optical device in terms of equalization-related operations with respect to optical signals transmitted via a channel of an optical line, the optical signals being subject during transmission over the channel to channel impairments having timescales of impact of said channel impairments on channel response of the channel which can be categorized into corresponding time-reference classes, the equalization optimizer (300) comprising electronic circuitry configured for:

- performing an analysis of successive samples of at least one channel-related parameter Pc related to said channel so as to determine a contribution value for each time-reference class among said time-reference classes, wherein the contribution value represents to what extent the channel impairments corresponding to the time-reference class in question contribute to said at least one channel-related parameter Pc;
- determining a value of at least one equalization-related parameter Pe according to the contribution values of the predetermined time-reference classes;
- configuring the transceiver optical device for equalization-related operations with respect to the optical signals transmitted via the channel, using the determined value of the at least one equalization-related parameter.

The electronic circuitry is further configured for:

- reviewing the contribution value of each time-reference class at a rate of the timescale corresponding to the time-reference class in question, and updating accordingly the at least one equalization-related parameter Pe so that a part thereof which depends on the time-reference class in question is only updated which leads to a per-class update, and
- reconfiguring the transceiver optical device for the equalization-related operations with respect to the optical signals transmitted via the channel, using the value of the at least one equalization-related parameter Pe after the per-class update.

BRIEF DESCRIPTION OF THE DRAWINGS

The characteristics of the invention will emerge more clearly from a reading of the following description of at least one example of embodiment, said description being produced with reference to the accompanying drawings, among which:

- Fig. 1 schematically represents an arrangement of an optical communications system, in which the present invention may be implemented;
- Fig. 2 schematically represents an arrangement of transceiver optical devices of the optical communications system;
- Fig. 3 schematically represents an arrangement of an equalization optimizer, in a first embodiment;

- Fig. 4 schematically represents an algorithm for configuring a transceiver optical device in terms of equalization-related operations;
- Fig. 5 schematically represents an arrangement of an equalization optimizer, in a second embodiment;
- Figs. 6A, 6B and 6C schematically represent look-up tables that may be used for channel inference, in a particular embodiment;
- Figs. 7A and 7B schematically represent algorithms for using the tables of Figs. 6A, 6B and 6C for channel inference;
- Fig. 8 schematically represents an arrangement of the equalization optimizer, in a third embodiment;
- Fig. 9 schematically represents an algorithm for adjusting a margin, on a per-class basis; and
- Fig. 10 schematically represents an exemplary hardware platform for implementing the equalization optimizer.

## DETAILED DESCRIPTION OF AT LEAST ONE EMBODIMENT

It has to be noticed that, since wavelength and frequency are tied together through a direct inverse relationship, these two terms are indifferently used by the one skilled in the art, as they refer to the same concept.

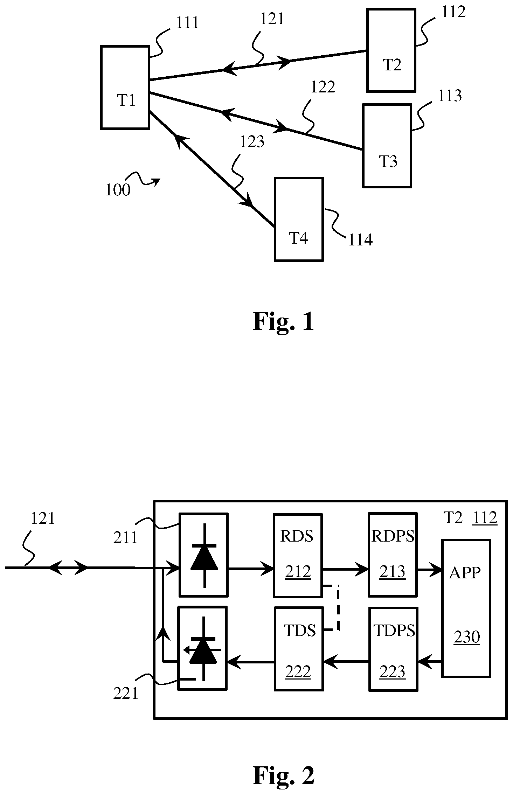

**Fig. 1** schematically represents an arrangement of an optical communications system 100, in which the present invention may be implemented.

The optical communications system 100 is part of an optical access and aggregation network.

The optical communications system 100 comprises at least a first transceiver optical device T1 111 and a second transceiver optical device T2 112 communicating with each other using an optical line 121.

As illustratively shown in Fig. 1, the optical communications system 100, the first transceiver optical device T1 111 may communicate with other transceiver optical devices T3 113, T4 114 using respective optical lines 122, 123.

Optical lines are optical paths between transceiver optical devices. Optical lines comprise optical fiber, but may further comprise power splitters, spectral splitter device to perform WDM (*Wavelength Division Multiplexing*), optical termination outlets, optical termination connectors...

Optical signals are thus transmitted in the optical communications system 100 through channels over the optical lines. Channels are communication pathways within the optical communications system 100 from a transceiver A to a transceiver B.

The channel from the transceiver A to the transceiver B can be defined as the optical path from said transceiver A to said transceiver B. The channel from the transceiver A to the transceiver B can be defined as further including analog optical stages of said transceiver A (laser...) and/or said transceiver B (photodiode...). The channel from the transceiver A to the transceiver B can be defined as further including analog electrical stages of said transceiver A and/or said transceiver B (transimpedance amplifiers, DAC / ADC ("Digital to Analog Converter" / "Analog-to-Digital Converter")...). The channel from the transceiver A to the transceiver B can be defined as further including digital processing after equalization operations of said transceiver A (often referred to as preequalization, *i.e.,* equalization at transmitter side) and/or digital processing before equalization operations of said transceiver B (often referred to as post-equalization, *i.e.,* equalization at receiver side).

Often, but not necessarily, channels are reciprocal in both directions of communication over an optical line, and more generally between one transceiver and another transceiver.

For example, the first transceiver optical device T1 111 is an OLT (*Optical Line Terminal*) device, and the second transceiver optical device T2 112, as well as the other transceiver optical devices T3 113, T4 114, are ONU (*Optical Network Units*) devices.

**Fig. 2** schematically represents an arrangement of the transceiver optical devices of the optical communications system 100. Let's consider that Fig. 2 schematically represents an arrangement of the second transceiver optical device T2 112.

The second transceiver optical device T2 112 comprises a receive chain and a transmit chain.

The receive chain comprises a receive analog stage 211, with an optical part including a photodiode to capture optical signals transmitted by the first transceiver optical device T1 111 via the optical line 121 and, downstream, an electrical part including at least typically a transimpedance amplifier and an analog-to-digital converter ADC. The receive chain further comprises a receive digital stage RDS 212 for performing digital processing on the captured optical signals. Digital processing in the receive chain typically includes demodulation, equalization and removal of equalization overhead. Equalization overhead shall be understood as preamble (a sequence of symbols sent prior to a data frame and used for channel estimation) since equalization is considered herein in the time domain, or other reference signals which lay be only statistically known (*e.g.,* blind equalization), used to enable defining the appropriate equalization coefficients at reception. The receive chain further comprises a receive data processing stage RDPS 213 for unpacking data to be processed by an application APP 230.

The transmit chain comprises a transmit data processing stage TDPS 223 for packing data provided by the application APP 230. The transmit chain further comprises a transmit digital stage TDS 222 for performing digital processing on the packed data. Digital processing in the transmit chain typically includes modulation and equalization overhead (such as preamble) insertion. The transmit chain further comprises a transmit analog stage 221, with an optical part including a laser to transmit optical signals to the first transceiver optical device T1 111 via the optical line 121, and, upstream, an electrical part including at least typically a digital-to-analog converter DAC.

As illustratively indicated by a dotted line in Fig. 2, the receive digital stage RDS 212 may communicate equalization-related information to the transmit digital stage TDS 222 in order to configure a size of preamble to be used in the transmit chain of the second transceiver optical device T2 112 and/or to provide feedback information to the first transceiver optical device T1 111 so that said first transceiver optical device T1 111 may perform accordingly its own equalization operations (e.g., pre-equalization). In a variant, this communication of equalization-related information from the receive chain to the transmit chain may be performed via the receive data processing stage RDPS 213 and the transmit data processing stage TDPS 223 to ease information packing toward the first transceiver optical device T1 111.

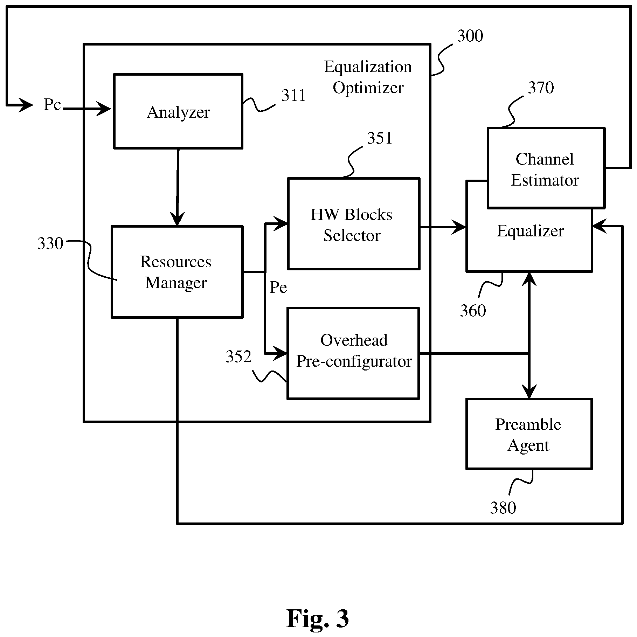

**Fig. 3** schematically represents an arrangement of an equalization optimizer 300, in a first embodiment.

The equalization optimizer 300 is preferably part of the receive digital stage RDS 212 of the arrangement in Fig. 2 and is connected to an equalizer 360.

The equalization optimizer 300 may, in a variant, be included in a device external to the transceiver in which equalization is performed. Hence, in a particular embodiment, the equalization optimizer 300 is included in a central office potentially included in an OLT device, which typically has numerous computing and memory resources, and performs equalization optimization for the benefit of ONU devices, which typically have comparatively few computing and memory resources.

The equalization optimizer 300 comprises an analyzer 311 configured to analyze, over time, variations of at least one channel-related parameter (referred to as Pc in Fig. 3). Such a channel-related parameter is for example channel depth, the speed of change of the channel possibly with related statistics (mean variance, etc.), the time of coherence of the channel possibly with related statistics (mean, variance, etc.), the peak-to-average-power-ratio (PAPR) of the optical signals received via the channel.

The analyzer 311 is configured to determine contributions to the at least one channel-related parameter in question according to time-reference classes. Indeed, during transmission over the channel, the optical signals are subject to channel impairments, resulting notably in optical signal spreading, which have timescales (also referred to as time constants) of impact of said channel impairments on channel response which can be categorized into corresponding time-reference classes.

Channel impairments may be due to various phenomena occurring during transmission (vibrations, change of environmental conditions...). For example, some physical phenomena may impact the magnitude of the optical signal spreading above a predetermined threshold THS within a time window of ten microseconds (*e.g.,* polarization mode dispersion PMD) while some other physical phenomena may impact the magnitude of the optical signal spreading above the predetermined threshold THS within one millisecond (*e.g.,* vibrations incurred by connectors due to wind or vehicle passing nearby). Channel impairments may also be due to quantization operations due to analog-to-digital conversion. Indeed, loss of data which is inherent to passing from analog domain to digital domain may create channel impairments. Channel impairments may also be due to bandwidth limited capabilities with respect to optical signal bandwidth, which may induce loss of data under certain circumstances and thus channel impairments.

Although it can be considered that one or more channel impairments impact the channel response with a timescale corresponding to a single time-reference class, it is also possible that one or more channel impairments impact the channel response with timescales corresponding to plural time-reference classes. It further means that one time-reference class may correspond to one or more channel impairments.

The analyzer 311 is therefore configured to determine, on a per-class basis (according to the time-reference classes), to what extent the channel impairments associated with the time-reference class in question contribute to the value of the at least one channel-related parameter Pc.

The time-reference classes may be predefined, for instance by simulation or analysis of the optical communications system 100 before deployment thereof. The time-reference classes may, in a variant, be dynamically determined during a period of time (*e.g.,* ten seconds) in which equalization is performed at receiver side at full resources capacity. For example, during this period of time, a whole set of wavelet transform candidates are used to detect which timescales are revealed to be above a predetermined contribution threshold with respect to the at least one channel-related parameter Pc or to at least one other channel-related parameter and shall be retained to define the time-reference classes to be used afterwards. It can be noted that more than one wavelet transform candidate may be used per time-reference class. For example, several wavelet transform candidates with the same shape and the same timescale but with different shifts may be used for the same time-reference class.

In a particular embodiment, the time-reference classes may be dynamically reevaluated from time to time, for example on a regular basis or following occurrence of a predetermined event. The whole set of wavelet transform candidates is used to detect again which timescales are revealed to be above the predetermined contribution threshold with respect to the at least one channel-related parameter Pc or to said at least one other channel-related parameter and shall be retained to define up-to-date time-reference classes to be used afterwards.

As detailed hereafter, at least one equalization-related parameter Pe is determined according to the determined contributions of the predetermined time-reference classes.

The analyzer 311 is further configured to review the contribution of each time-reference class at a rate of the timescale of the one or more channel impairments corresponding to the time-reference class in question. Consequently, as detailed hereafter, the at least one equalization-related parameter Pe is partly updated accordingly so that a part thereof which depends on the time-reference class in question is only updated.

As an explanatory example, the analyzer 311 reviews every millisecond information about the contribution to the at least one channel-related parameter Pc of the one or more channel impairments having a millisecond timescale of impact on the channel response, and the part of the at least one equalization-related parameter Pe which depends on the millisecond time-reference class is updated accordingly (if needed) also every millisecond. And the analyzer 311 updates every ten microseconds information about the contribution to the at least one channel-related parameter Pc of the one or more channel impairments having a ten-microsecond timescale of impact on the channel response, and the part of the at least one equalization-related parameter Pe which depends on the ten-microsecond time-reference class is updated accordingly (if needed) also every ten microseconds.

In the receive digital stage RDS 212, the equalizer 360 includes or is connected to a channel estimator 370. The channel estimator 370 is configured to estimate the response of the optical line 121 so as to enable the equalizer 360 to determine adequate values of equalization coefficients. Channel estimation can be non-data-aided or data-aided. The channel estimator 370 is preferably further configured to monitor equalization performance, the speed of change of the channel and the time of coherence of the channel and possibly with related statistics (mean, variance...). The time of coherence of the channel is defined as the time duration during which the channel has constant or monotonous behavior. The channel estimator 370 may further be configured to monitor signal-to-noise ratio (SNR), which is an indication of equalization performance. The channel estimator 370 is configured to provide in accordance the at least one channel-related parameter (referred to as Pc in Fig. 3) used by the analyzer 311.

The equalization optimizer 300 comprises a resources manager 330 configured to determine a value of at least one equalization-related parameter Pe (which depends on the at least one channel-related parameter Pc) according to said contributions of the predetermined time-reference classes which are determined by the analyzer 311. The resources manager 330 is also configured to update the at least one equalization-related parameter Pe, each time one or more contributions are reviewed, for a part of the at least one equalization-related parameter Pe which depends on the time-reference class to which the contribution in question corresponds. It means that, unless the contribution of one of said time-reference class is reviewed, the part of the at least one equalization-related parameter Pe which depends on the time-reference class in question remains unchanged.

The resources manager 330 is configured to configure equalization-related operations according to the at least one equalization-related parameter Pe as determined or reviewed.

In a particular embodiment, the equalization-related operations are among:

- dynamically determining a quantity of hardware blocks of the transceiver optical device usable to perform equalization of the optical signals;
- dynamically determining a set of equalization coefficients;
- dynamically determining a set of pre-equalization coefficients; and
- dynamically determining preamble size;
- dynamically determining a margin on the at least one equalization-related parameter Pe.

In a particular embodiment (as shown in Fig. 3), the equalization optimizer 300 comprises a hardware (HW) blocks selector 351. The hardware blocks selector 351 is configured by the resources manager 330 according to the at least one equalization-related parameter Pe to selectively activate/inactivate hardware blocks (logic cells, registers, multipliers, memory storage) used for performing equalization and to indicate to the equalizer 360 which hardware blocks are usable for performing equalization. This enables energy consumption reduction by inactivating hardware blocks unnecessary for performing equalization.

In a particular embodiment (as shown in Fig. 3), the equalization optimizer 300 comprises an overhead pre-configurator 352. The overhead pre-configurator 352 is configured by the resources manager 330 according to the at least one equalization-related parameter Pe to indicate to the equalizer 360 how many taps shall be processed in order to perform equalization.

In a particular embodiment, the overhead pre-configurator 352 is further configured to also indicate to a preamble agent 380 what shall be the appropriate size of the preamble in order to inform the transmit digital stage TDS 222 about the appropriate size of the preamble when transmitting optical signals via the optical line 121. This is particularly applicable when the channel is reciprocal (substantially identical channels in both directions over the optical line 121). This limits computing resources usage and energy consumption. It can be further noted that it also improves latency (e.g., shortened preamble compared with the worst case where the preamble has a maximum allowable size).

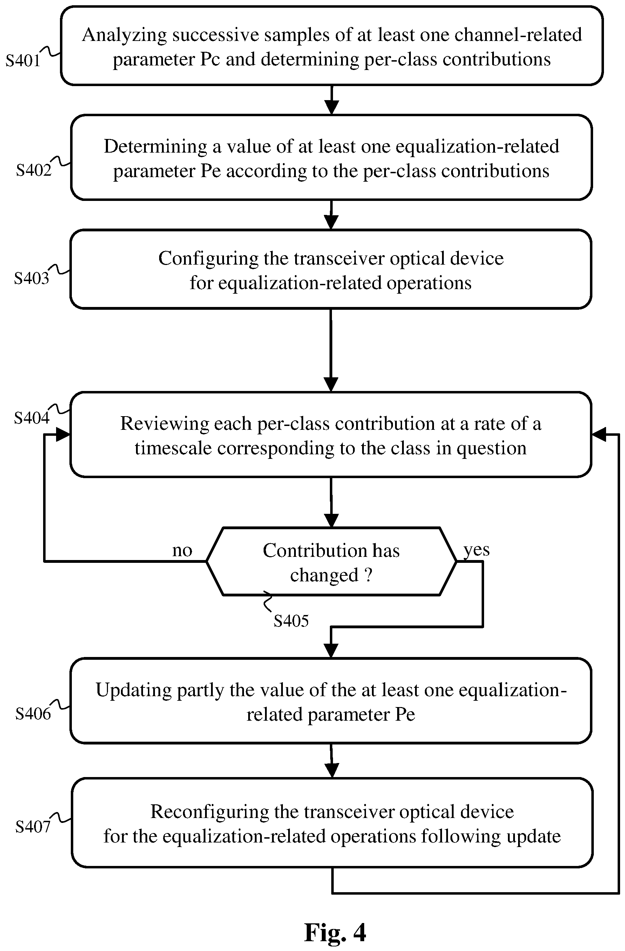

**Fig. 4** schematically represents an algorithm for configuring a transceiver optical device in terms of equalization-related operations.

In a step S401, the equalization optimizer 300 analyzes successive samples of at least one channel-related parameter Pc and determines a contribution value for each time-reference class among said predetermined time-reference classes, wherein the contribution value represents to what extent the one or more channel impairments corresponding to the time-reference class in question contribute to said at least one channel-related parameter Pc. Thus, the equalization optimizer 300 determines per-class contributions.

The contributions values may be further decomposed over statistical moments e.g., as a mean value plus a variance value. This enables distinguishing impacts of channel impairments with continuous behavior (null or quasi-null variance) from impacts of channel impairments with random behavior (non-null variance).

In a particular embodiment, the contributions in question are determined using Fourier transforms over respective sliding windows, wherein each sliding window has a size that is equal to the timescale of the time-reference class for which the contribution in question is determined (timescale of impact on the channel response of the at least one channel impairment corresponding to the time-reference class in question). It means that a sliding window of 1 millisecond is used to determine the contribution to said channel-related parameter Pc of channel impairments having a millisecond timescale of impact on the channel response.

In a preferred variant embodiment, the contributions in question are determined using wavelet transforms, wherein, for each time-reference class, the equalization optimizer 300 uses a wavelet with a timescale matching the timescale of impact on the channel of the channel impairment corresponding to the time-reference class in question.

A wavelet is a wave-shaped signal that is time bounded. Considering a given shape for this wavelet, shifting its time origin and modifying its timescale enables capturing any kind of time varying signal. More precisely, considering a signal x(t), the wavelet transform of this signal is:

$$g(a,b) = \frac{1}{\sqrt{a}} \int_{t=-\infty}^{t=+\infty} x(t)\bar{\psi}_{a,b}(t)dt$$

with $a \neq 0$ being the timescale (frequency) and $b$ being the time origin,
wherein $\psi_{a,b}$ is obtained by translating and enlarging a particular function so-called mother wavelet:

$$\psi_{a,b}(t) = \psi\left(\frac{t-b}{a}\right)$$

In order to allow defining an orthogonal basis on which any signal of finite energy can be projected, the mother wavelet has to verify the following properties:

- $\psi$ should be an oscillating function having a null integral;
- the integral of its square should also be definite.

Despite other types of wavelets can be used herein, Haar wavelets are mother wavelength of particular interest. Indeed, let's consider a real function $x(t)$ that is defined over the interval [0,1[ and that is sampled over $N=2^m$, $m \neq 0$, points, and wherein $x_k$ is defined as

$$x_k = x(t_k) \text{ for } t_k = 0, \frac{1}{N}, ..., \frac{N-1}{N}$$

Let's further define $\phi(t)$ as

$$\phi(t) = \begin{cases} 1 \text{ for } 0 \leq t < 1 \\ 0 \text{ otherwise} \end{cases}$$

and

$$\phi_{j,k}(t) = \phi(2^j t - k)$$

which leads to

$$\phi_{j,k}(t) = \begin{cases} 1 \text{ for } \dfrac{k}{2^j} \leq t < \dfrac{k+1}{2^j} \\ 0 \text{ otherwise} \end{cases}$$

In that situation, x(t) can be recovered as

$$x(t) = \sum_{k=0}^{N-1} \left(x_k \phi_{m,k}(t)\right)$$

When denoting

$$\langle f, g \rangle = \int_0^1 f(t)g(t)dt$$

it leads to

$$\langle \phi_{j,k1}, \phi_{j,k2} \rangle = 0 \text{ for } k1 \neq k2$$

and

$$\left\|\phi_{j,k}\right\|^2 = \langle \phi_{j,k}, \phi_{j,k} \rangle = \frac{1}{2^j}$$

So, for each $j$, the functions $\phi_{j,k}(t)$ are an ortho-

gonal basis that generates vectorial subspaces noted V$j$ of dimension $2^j$ of real functions that can be integrated over $\phi_{j\ k}(t)$. This basis can be made orthonormal by multiplying $\phi_{j,k}(t)$ by $\sqrt{2^j}$ .

Considering the at least one channel-related parameter Pc as the signal to be analyzed (successive samples), this result is of importance since the decomposition of the signal leads to contribution of different and independent vectorial subspaces V$j$ (*i.e.,* different time constants, which also means in a linear channel assumption that the contribution of each vectorial subspace V$j$ can be estimated and equalized independently from the others).

This means that at a time instant t2 following a previous estimation/equalization instant time *t1,* only the contributions related to time-reference classes corresponding to the timescale substantially matching the time interval *t2-t1* have to be recomputed and the other contributions can be kept unchanged.

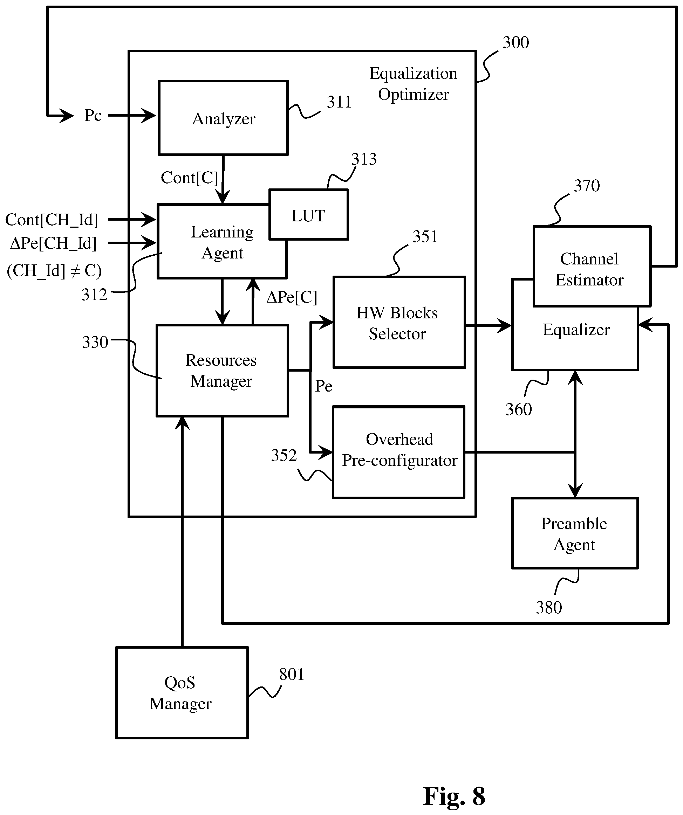

In a particular embodiment, the equalization optimizer 300 adds a predetermined margin to each determined contribution value. It means that, at each instant, the total margin applied is the sum of the margins for all the time-reference classes. The margin preferably depends on the contribution value to which the margin applies, *e.g.,* as a predetermined percentage of the contribution value. A particular embodiment is presented hereafter with respect to Fig. 8.

It can further be noted that, when the contributions values are decomposed into a mean value plus a variance value, the margin may be decomposed into a first margin applied to the mean value of the contribution value in question plus a second margin applied to the variance value of the contribution value.

In a step S402, the equalization optimizer 300 determines a value of at least one equalization-related parameter Pe according to the per-class contributions. The whole set of contributions is here considered. The at least one equalization-related parameter Pe depends on the at least one channel-related parameter Pc.

An example of equalization-related parameter Pe is a set of equalization coefficients. Another example of equalization-related parameter Pe is a number of hardware blocks (logic cells, registers, multipliers, memory storage) used for performing equalization. Yet another example of equalization-related parameter Pe is preamble length. Yet another example of equalization-related parameter Pe is margin applied to preamble length. Yet another example of equalization-related parameter Pe is a set of pre-equalization coefficients (signal shaping prior to transmission over the channel).

In a step S403, the equalization optimizer 300 configures (may be done remotely) the transceiver optical device for equalization-related operations according to the value of the at least one equalization-related parameter Pe.

Once the transceiver optical device is configured according to the whole set of contributions, only updates by parts can be done.

Therefore, in a step S404, the equalization optimizer 300 analyzes following successive samples of the at least one channel-related parameter Pc and reviews the contribution value for each time-reference class among said predetermined time-reference classes, but at a rate of the timescale corresponding to the time-reference class in question. Thus, the contribution value for a time-reference class having a corresponding timescale of ten microseconds is reviewed every ten microseconds, the contribution value for a time-reference class having a corresponding timescale of one millisecond is reviewed every millisecond, the contribution value for a time-reference class having a corresponding timescale of one second is reviewed every second, etc. Then, the equalization optimizer 300 updates accordingly the at least one equalization-related parameter Pe so that a part thereof which depends on the time-reference class in question is only updated, which leads to a per-class update.

It can be understood from the foregoing that the contributions values are not expressed as percentage of the value of the at least one channel-related parameter Pc.

And, in a step S405, the equalization optimizer 300 reconfigures the transceiver optical device for the equalization-related operations with respect to the optical signals transmitted via the channel, using the value of the at least one equalization-related parameter Pe after the per-class update.

Let's consider an example where the channel depth is the channel-related parameter Pc and the set of equalization coefficients (taps) is the equalization-related parameter Pe. The analyzer 311 reveals that part A of the channel depth comes from the contribution of a time-reference class representative of at least one channel impairment that has a timescale of impact of the channel response equal to one millisecond (*e.g.,* vibrations incurred by connectors due to wind or vehicle passing nearby) and another part B of the channel depth comes from the contribution of a time-reference class representative of at least one channel impairment that has a timescale of impact of the channel response equal to ten microseconds (*e.g.,* polarization mode dispersion PMD). Other contributions may be considered in this example as negligible and compensated by a predetermined margin. Initially, the set of equalization coefficients (taps) is defined according to all the contributions. Then, the part A of the channel depth is reviewed every millisecond, and the corresponding part of the set of equalization coefficients (taps) is updated in accordance, and the part B of the channel depth is reviewed every microsecond and the corresponding part of the set of equalization coefficients (taps) is updated in accordance. Operating by parts thus enables preserving computing resources, especially when considering iterative process such as CMA (Constant Modulus algorithm) for determining the equalization coefficients (taps).

In a particular embodiment, when the contribution value for one time-reference class to the at least one channel-related parameter Pc is below a predetermined threshold THc, the equalization optimizer 300 does not take into account said time-reference class when configuring or reconfiguring the transceiver optical device for the equalization-related operations.

In a particular embodiment, when the difference in contribution value for one class between two successive reviews of the contribution of said time-reference class to the at least one channel-related parameter Pc is below a predetermined threshold THd, the equalization optimizer 300 does not update the part of the at least one equalization-related parameter Pe which depends on the time-reference class in question. It has to be noted that the equalizer 360 however takes into account the at least one equalization-related parameter Pe as a whole in order to perform the equalization-related operations.

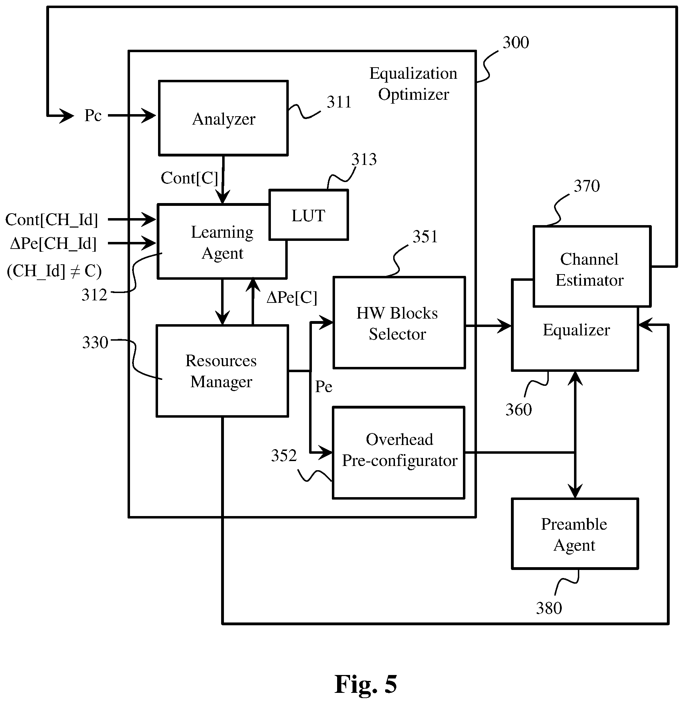

Fig. 5 schematically represents an arrangement of the equalization optimizer 300, in a second embodiment. The second embodiment is suitable to perform channel inference.

In this second embodiment, a learning agent 312 is present between the analyzer 311 and the resources manager 330.

The learning agent 312 is configured to receive information about the contribution of each time-reference class determined or reviewed by the analyzer 311. The information about the contributions in question is labelled Cont [C] in Fig. 5 (vector of contributions determined or reviewed for channel C).

The learning agent 312 is configured to further receive information about the contribution to the at least one channel-related parameter Pc of each time-reference class determined or reviewed for other channels than the channel for which the analyzer 311 monitors and analyzes the at least one channel-related parameter Pc. The learning agent 312 is thus configured to further receive information about said per-class contributions Cont [CH_Id] corresponding to several channels (vector of contributions determined or reviewed for each channel CH_Id among $N$ channels). For example, in Fig. 1, the first transceiver optical device T1 111 has one analyzer for each channel from the second transceiver optical device T2 112 and the first transceiver optical device T1 111 other transceiver optical devices T3 113, T4 114 and the first transceiver optical device T1 111 is configured to receive information about the contribution of each time-reference class determined or reviewed by each analyzer. According to another example, the second transceiver optical device T2 112 receives information about the contribution of each time-reference class determined or reviewed for other channels by the first transceiver optical device T1 111. Moreover, the first transceiver optical device T1 111 may share with the second transceiver optical device T2 112 information about the contribution of each time-reference class determined or reviewed for other channels by the other transceiver optical devices T3 113, T4 114.

In a particular embodiment, the learning agent 312 is configured to receive from the resources manager 330, in parallel to the information about said per-class contributions Cont [C], information about the difference ΔPe [C] between the value of the at least one equalization-related parameter Pe obtained for the corresponding per-class contributions Cont [C] and the value of the at least one equalization-related parameter Pe obtained for the preceding value of the corresponding per-class contributions Cont [C]. Similarly, the learning agent 312 is further configured to receive, in parallel to any information Cont [CH_Id], information about the difference ΔPe [CH_Id] between the value of the at least one equalization-related parameter Pe obtained for the corresponding contributions Cont [CH_Id] and the value of the at least one equalization-related parameter Pe obtained for the preceding value corresponding contributions Cont [CH_Id].

The learning agent 312 is configured to store the received information Cont and ΔPe in look-up tables 313. The contents of the look-up tables 313 can then be used for channel inference, namely, to use, for equalization operations related to the channel C, per-class contributions data stored in the look-up tables 313 with respect to other channels.

In a particular embodiment, the channel inference is performed, with respect to any one said time-reference class for one channel (let's say channel $x$), by applying, to the part of the at least one equalization-related parameter Pe which depends on said time-reference class, the same variation as obtained for the part of the at least one equalization-related parameter Pe for said time-reference class with respect to another channel (let's say channel $y$). Said another channel $y$ is selected by the equalization optimizer 300 according to at least one criterion of similarity between channels.

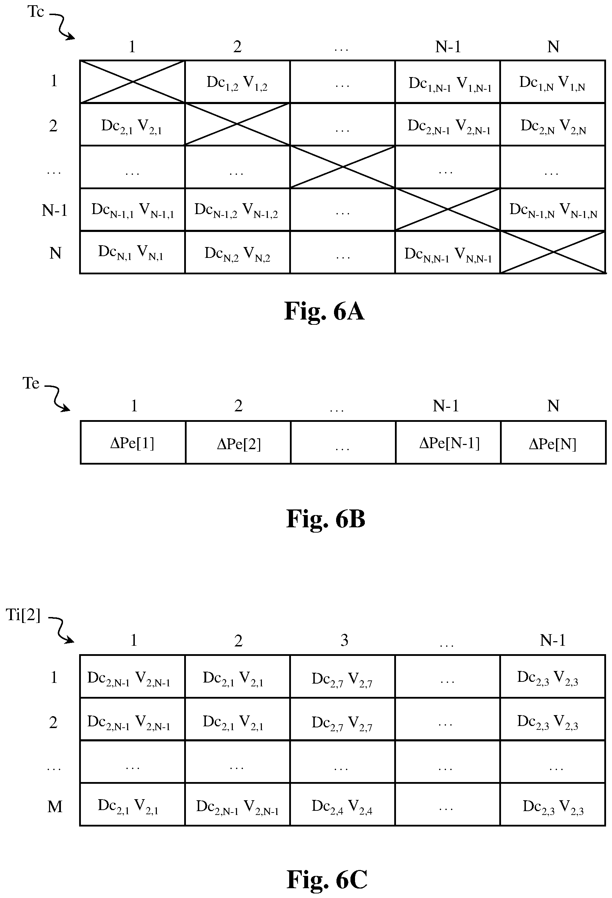

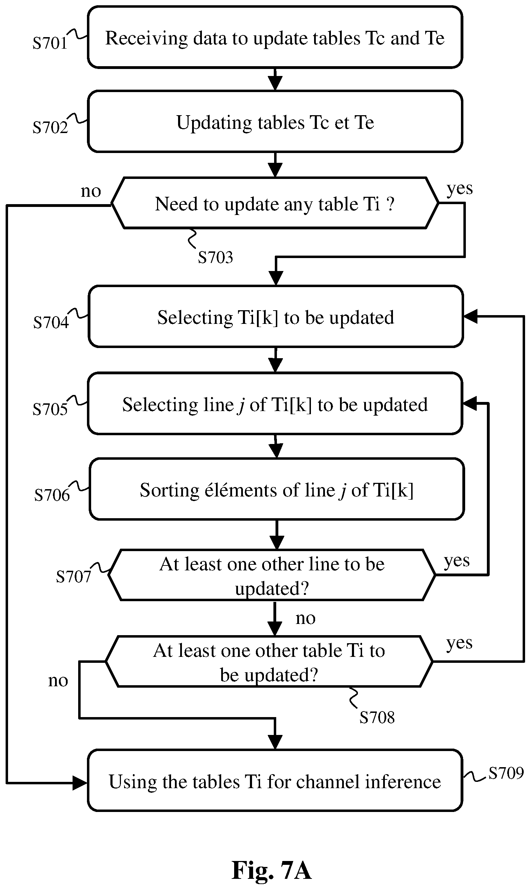

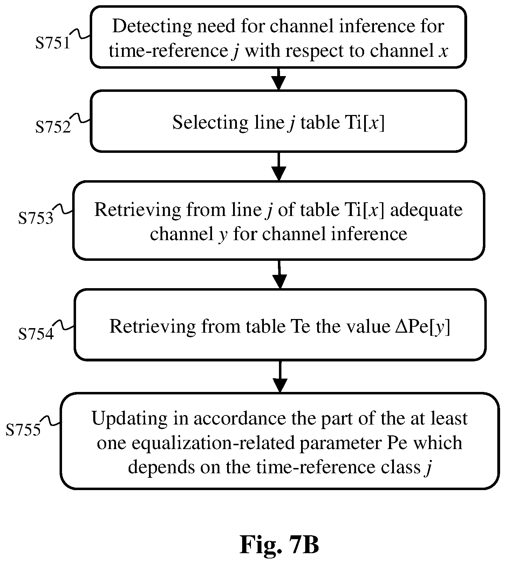

At least one particular embodiment is disclosed hereafter with respect to Figs. 6A, 6B and 6C, and further with respect to Figs. 7A and 7B.

It can be understood from the foregoing disclosure that the contents of the look-up tables 313 may be shared with another transceiver optical device in order to speed up acquisition of knowledge about per-class contribution values in the optical communications system 100.

**Figs. 6A, 6B and 6C** schematically represent a particular embodiment of the look-up tables 313 that may be used for channel inference.

Fig. 6A schematically represents a table Tc having $N$ columns (indexed from 1 to $N$) and $N$ lines (indexed from 1 to $N$), wherein $N$ represents the quantity of channels about which information can be used for channel inference.

The table Tc is used to store information about difference $Dc_{x,y}$ between per-class contributions to the at least one channel-related parameter Pc of any channels $x$ and $y$ ($x \neq y$) among the $N$ channels. Thus, for each line $x$

($x = 1,..,N$) and each column $y$ ($y = 1,..,N$ with $y \neq x$), $Dc_{x,y}$ is a vector where each dimension represents one time-reference class. The information about difference $Dc_{x,y}$ is computed from information about contributions Cont [CH_Id] mentioned above with respect to Fig. 5 (namely Cont [$x$] and Cont [$y$]). Thus, considering $M$ possible time-reference classes, the size of the vector $Dc_{x,y}$ with respect to the time reference classes is $M$. According to the dimension of the at least one channel-related parameter Pc, each component of $Dc_{x,y}$ with respect to the time-reference classes can be a scalar or a vector. And, by the way, it can be noted that $Dc_{x,y}$. equals $-Dc_{y,x}$.

Moreover, the table Tc is used to store information about variance $V_{x,y}$ of the difference $Dc_{x,y}$. ($x = 1,..,N$ and y = 1,..,$N$ with $y \neq x$).

In a particular embodiment, the table Tc further stores timestamp information $Ts_{x,y}$ (not shown in Fig. 6A) indicating the oldest instant among the instants at which the per-class contributions to the at least one channel-related parameter Pc of the channels $x$ and y have been obtained to compute the difference $Dc_{x,y}$ in question.

Fig. 6B schematically represents a table Tc having a single line with $N$ columns (indexed from 1 to $N$).

The table Te is used to store information about the difference $\Delta Pe$ [CH_Id] mentioned above with respect to Fig. 5, one column for each channel. In a particular embodiment, the variance of said difference $\Delta Pe$ [CH_Id] is further computed and stored. Stored information about variance can then be used to tune margin values (higher the variance, higher the margin applied to the part of the at least one equalization-related parameter Pe corresponding to the time-reference class in question).

Fig. 6C schematically represents a table Ti[$x=2$] having $N$ columns (indexed from 1 to $N$) and $M$ lines (indexed from 1 to $M$). One such table Ti[$x$] ($x = 1,..,N$) exists for each channel for which per-class contributions may be deduced by channel inference from contributions information stored for other channels. The table Ti[$x$] is a sorted version of the line $x$ of the table Tc ($N-1$ useful columns in the table Tc since $Dc_{x,y}$ with $y = x$ is irrelevant) for each possible time-reference class (one per line, from 1 to $M$).

In the table Ti[$x$] ($x = 1,..,N$), for each time-reference class (namely for each line of the table Ti[$x$]) the vectors $Dc_{x,y}$ ($y = 1,..,N$ with $y \neq x$) are sorted in sequential order (i.e., decreasing order or increasing order) of a score taking into account the value of the variance $V_{x,y}$ ($y = 1,..,N$ with $y \neq x$) for said time-reference class. The score represents similarity between channels. The score may rely only on the value of the variance $V_{x,y}$ ($y = 1,..,N$ with $y \neq x$) for said time-reference class. The score may rely on the value of the variance $V_{x,y}$ ($y = 1,..,N$ with $y \neq x$) for said time-reference class as well as on one or more other criteria, potentially with weighting coefficients. For example, one criterion is related to aging of information used to determine the difference $Dc_{x,y}$: more weight being given to most recent information. For example, one criterion is related to variance of the variance $V_{x,y}$ ($y = 1,..,N$ with $y \neq x$): more weight being given to lowest variance of the variance $V_{x,y}$.

The table Ti[$x$] can then be used by the equalization optimizer 300 to perform channel inference for the channel $x$ from any other channel $y$ ($y = 1,..,N$ with $y \neq x$) selected on a per-class basis.

Fig. 6C shows an example for the table Ti[2] wherein:

- for the time-reference class indexed by 1, the difference $D_{C2,N-1}$ with variance $V_{2,N-1}$ appears first in sequence (column 1), then the difference $Dc_{2,1}$ with variance $V_{2,1}$ appears second in sequence (column 2), then the difference $Dc_{2,7}$ with variance $V_{2,7}$ appears third in sequence (column 3),... and the difference $Dc_{2,3}$ with variance $V_{2,3}$ appears at the end (column $N$-1);

- for the time-reference class indexed by 2, the difference $Dc_{2,N-1}$ with variance $V_{2,N-1}$ appears first in sequence (column 1), then the difference $Dc_{2,1}$ with variance $V_{2,1}$ appears second in sequence (column 2), then the difference $Dc_{2,7}$ with variance $V_{2,7}$ appears third in sequence (column 3),... and the difference $Dc_{2,3}$ with variance $V_{2,3}$ appears at the end (column $N$-1);

- for the time-reference class indexed by 2, the difference $Dc_{2,1}$ with variance $V_{2,1}$ appears first in sequence (column 1), then the difference $Dc_{2,N-1}$ with variance $V_{2,N-1}$ appears second in sequence (column 2), then the difference $Dc_{2,4}$ with variance $V_{2,4}$ appears third in sequence (column 3),... and the difference $Dc_{2,3}$ with variance $V_{2,3}$ appears at the end (column $N$-1).

As shown in the example of the table Ti[2] in Fig. 6C, $Dc_{x,y}$. ($x = 1,..,N$ and $y = 1,..,N$ with $y \neq x$) are sorted in the same order for the two first lines, namely for the time-reference classes indexed by 1 and 2, but $Dc_{x,y}$. ($x = 1,..,N$ and $y = 1,..,N$ with $y \neq x$) are sorted differently for the last line, namely for the time-reference classes indexed by $M$.

**Figs. 7A and 7B** schematically represent algorithms for using the tables Tc, Te and Ti for channel inference.

Fig. 7A schematically represents an algorithm for updating the tables Tc, Te and Ti.

In a step S701, the equalization optimizer 300 receives data to update the tables Tc and Te. For example, the equalization optimizer 300 receives said contribution value Cont [CH_Id] and said difference $\Delta Pe$ [CH_Id] for one or more time-reference class with respect to the channel identified by CH_Id among the $N$ channels.

In a step S702, the equalization optimizer 300 updates the tables Tc and Te in accordance with the data received in the step S701 so that the up-to-date values of the contribution Cont [CH_Id] and the difference $\Delta Pe$ [CH_Id] is reflected in the vectors $Dc_{x,y}$, $V_{x,y}$ and $\Delta Pe$ [$x$] ($x = 1,..,N$ and $y = 1,..,N$ with $y \neq x$).

In a step S703, the equalization optimizer 300 checks whether or not the contents of the table Tc have changed, which requires update of one or more of the tables Ti[x] (x = 1,..,N). When this is the case, a step S704 is performed; otherwise, a step S709 is performed.

Then, the equalization optimizer 300 sorts the contents of any one of the tables Ti[x] (x = 1,..,N) that require update in view of the changes made to the contents of the table Tc in the step S702.

To do so, in a particular embodiment, in the step S704, the equalization optimizer 300 selects a table Ti[k] among the tables Ti[x] (x = 1,..,N) which require update in view of the changes made to the contents of the table Tc in the step S702.

In a step S705, the equalization optimizer 300 selects a line j of the table Ti[k] which requires update.

In a step S706, the equalization optimizer 300 sorts the elements of the line j of the table Ti[k] in decreasing order of the value of the variance $V_{x,y}$ for the time-reference class corresponding to the line j.

In a step S707, the equalization optimizer 300 checks whether or not at least one other line of the table Ti[k] needs to be updated. When this is the case, the step S705 is repeated by selecting another line j of the table Ti[k] which requires update; otherwise, a step S708 is performed.

In the step S708, the equalization optimizer 300 checks whether or not at least one other table Ti among the tables Ti[x] (x = 1,..,N) needs to be updated. When this is the case, the step S704 is repeated by selecting another table Ti[k] among the tables Ti[x] (x = 1,..,N) which require update in view of the changes made to the contents of the table Tc in the step S702; otherwise, the step S709 is performed.

In the steps S709, the equalization optimizer 300 uses the tables Ti for channel inference.

Fig. 7B schematically represents an algorithm for using the tables Ti for channel inference.

In a step S751, the equalization optimizer 300 detects a need for channel inference for a time-reference class j (j ∈ [1; M]) with respect to channel x (x ∈ [1; N]). For example, when a contribution of the time-reference class j is needed to update the at least one equalization related parameter Pe with respect to equalization operations applied to the channel x, the equalization optimizer 300 considers that the value of said contribution of the time-reference class j at its disposal is too old.

In a step S752, the equalization optimizer 300 selects the line j of table Ti[x].

In a step S753, the equalization optimizer 300 retrieves from the line j of the table Ti[x] adequate channel y for channel inference, namely the channel y showing the best sorting score for the time-reference class j with respect to channel x (x ∈ [1; N]), as sorted in the line j of table Ti[x].

In a step S754, the equalization optimizer 300 retrieves from the table Te the difference value ∆Pe[y].

In a step S755, the equalization optimizer 300 updates the at least one equalization-related parameter Pe in accordance. Namely, the equalization optimizer 300 updates the part of the at least one equalization-related parameter Pe which depends on the time-reference class j by applying the difference value ∆Pe[y], which has been retrieved from the table Te, to the preceding value of the part of the at least one equalization-related parameter Pe which depends on the time-reference class j.

**Fig. 8** schematically represents an arrangement of the equalization optimizer 300, in a third embodiment.

In this third embodiment, a QoS (Quality of Service) manager 801 is connected to the resources manager 330.

In Fig. 8, the learning agent 312 is still present between the analyzer 311 and the resources manager 330 but may be omitted.

The QoS manager 801 is configured to provide quality of service target data (QoS target data) to the resources manager 330. The resources manager 330 is configured to adjust the aforementioned margin and/or threshold THd and/or threshold THc, for at least one time-reference class, according to the QoS target data provided by the QoS manager 801.

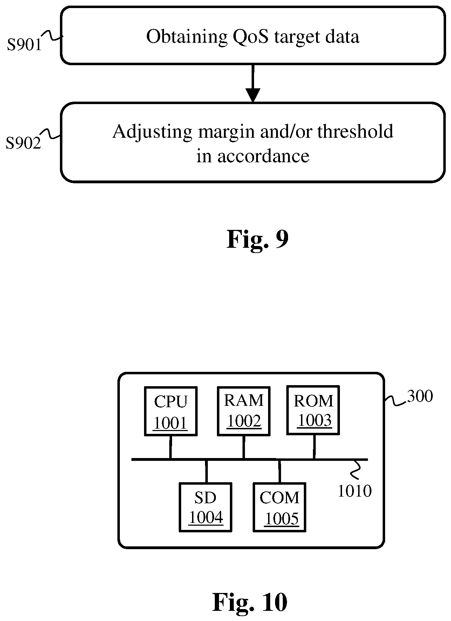

**Fig. 9** schematically represents an algorithm for adjusting the aforementioned margin and/or threshold THd and/or threshold THc, on a per-class basis.

In a step S901, the equalization optimizer 300 obtains quality of service target data (QoS target data). As already mentioned, in a particular embodiment, the QoS target data correspond to an outage probability among a predetermined set of candidate outage probabilities (1s per year, 3s per year, 10s per year, 1 min per year, best effort...).

It can be noted that different QoS target data may be applied, at any instant, to different channels.

In a step S902, the equalization optimizer 300 adjusts consequently the margin to the determined contribution value to the channel-related parameter Pc for at least one time-reference class, and/or the equalization optimizer 300 adjusts consequently the threshold THd and/or the equalization optimizer 300 adjusts consequently the threshold THc. Higher the outage probability, higher the margin value. Higher the outage probability, lower the value of the threshold THd and/or THc.

In a particular embodiment, the margin is adjusted only for time-reference classes that represent at least one channel impairment with random behavior (non-null variance), such as for one time-reference class representative of polarization mode dispersion PMD.

**Fig. 10** schematically represents an illustrative hardware platform for implementing the equalization optimizer 300.

According to the illustrative hardware architecture, the equalization optimizer 300 comprises at least the following components interconnected by a communication bus 1010: a processor, microprocessor, microcontroller or CPU (Central Processing Unit) 1001; a RAM (Random-Access Memory) 1002; a ROM (Read-Only Memory) or Flash memory 1003; an HDD (Hard-Disk Drive) or an SD (Secure Digital) card reader 1004, or any other device adapted to read information stored on non-transitory information storage medium; and at least one communication interface COM 1005 so as to enable optical communications as used herein.

CPU 1001 is capable of executing instructions loaded into RAM 1002 from ROM 1003 or from an external memory, such as an SD card via the SD card reader 1004. After the equalization optimizer 300 has been powered on, CPU 1001 is capable of reading instructions from RAM 1002 and executing these instructions. The instructions form one computer program that causes CPU 1001 to perform some or all of the steps of the algorithms described herein.

Consequently, it is understood that any and all steps of the algorithm described herein may be implemented in software form by execution of a set of instructions or program by a programmable computing machine, such as a DSP (Digital Signal Processor) or a microcontroller; or else implemented in hardware form by a machine or a dedicated chip or chipset, such as an FPGA (Field-Programmable Gate Array) or an ASIC (Application-Specific Integrated Circuit). In general, the equalization optimizer 300 comprises processing electronics circuitry adapted and configured for implementing the relevant steps, operations and algorithms as described herein.

As already mentioned, the equalization optimizer 300 is not mandatorily located at the receive end of the optical line carrying the channel considered. The equalization optimizer 300 may indeed be located at the transmit end of said optical line.

Thus, in a particular embodiment, the equalization optimizer 300 is located at a central point, namely 111 at the first transceiver optical device T1 in the optical communications system 100 depicted in Fig. 1, since this is a point of convergence of many channels (*e.g.,* OLT) and since channels over a same optical line (e.g., both directions) are reciprocal. The central point can in that case have access (comprise or be connected to) to high computing capabilities, which reduces deployment costs, since there is no need to have high computing capabilities at the other ends (*e.g.,* ONUs) while still benefiting from equalization optimization.

The central point may also have to the largest look-up table in the optical communications system 100 with therefore the highest ability to build the aforementioned pairing table.

Contributions values, or look-up table contents, may then be distributed from the first transceiver optical device T1 (*e.g.,* OLT) to the other transceiver optical devices (*e.g.,* ONUs). And, in a variant, in order to avoid transmissions of look-up table contents, it could be beneficial to compute and use the aforementioned contributions values to perform pre-equalization at the central point end in downstream direction (typically from the OLT toward the ONUs) and post-equalization at the central point in upstream direction (typically from the ONUs to the OLT).

## Claims

1. A method for configuring a transceiver optical device (111, 112) in terms of equalization-related operations with respect to optical signals transmitted via a channel of an optical line (121), the optical signals being subject during transmission over the channel to channel impairments having timescales of impact on channel response of the channel which can be categorized into corresponding time-reference classes, the method being performed by an equalization optimizer (300), wherein the method comprises:

- performing (S401) an analysis of successive samples of at least one channel-related parameter Pc related to said channel so as to determine a contribution value for each time-reference class among said time-reference classes, wherein the contribution value represents to what extent the channel impairments corresponding to the time-reference class in question contribute to said at least one channel-related parameter Pc;
- determining (S402) a value of at least one equalization-related parameter Pe according to the contribution values of the predetermined time-reference classes;
- configuring (S403) the transceiver optical device (111, 112) for equalization-related operations with respect to the optical signals transmitted via the channel, using the determined value of the at least one equalization-related parameter;

and wherein the method further comprises:

- reviewing (S404) the contribution value of each time-reference class at a rate of the timescale corresponding to the time-reference class in question, and updating (S406) accordingly the at least one equalization-related parameter Pe so that a part thereof which depends on the time-reference class in question is only updated which leads to a per-class update, and
- reconfiguring (S407) the transceiver optical device (111, 112) for the equalization-related operations with respect to the optical signals transmitted via the channel, using the value of the at least one equalization-related parameter Pe after the per-class update.

2. The method according to claim 1, wherein the contribution value for each class is determined using wavelet transforms, and wherein, for each time-reference class, the equalization optimizer (300) uses at least one wavelet with a timescale matching the timescale of impact on the channel of the channel impairments corresponding to the time-reference class in question.

3. The method according to claim 2, wherein the time-reference classes are dynamically predetermined during a period of time in which equalization is performed at receiver side at full resources capacity, wherein a whole set of wavelet transform candidates are used to detect which timescales are revealed to be above a predetermined contribution threshold with respect to the at least one channel-related parameter or to at least one other channel-related parameter and shall be retained to define the time-reference classes to be used afterwards.

4. The method according to any one of claims 1 to 3, wherein the equalization-related operations are among:

   - dynamically determining a quantity of hardware blocks of the transceiver optical device usable to perform equalization of the optical signals;
   - dynamically determining a set of equalization coefficients;
   - dynamically determining a set of pre-equalization coefficients;
   - dynamically determining preamble size; and
   - dynamically determining margin on the at least one equalization-related parameter Pe.

5. The method according to any one of claims 1 to 4, wherein the equalization optimizer adds a predetermined margin to each determined contribution value, wherein the margin depends on the contribution value to which the margin applies.

6. The method according to any one of claims 1 to 5, wherein the margin is adjusted according to, for at least one time-reference class, quality of service target data representative of outage probability.

7. The method according to any one of claims 1 to 6, wherein the equalization optimizer (300) uses the contribution value for at least one said time-reference class for channel inference with respect to at least one respective other channel.

8. The method according to claim 7, wherein the channel inference is performed, with respect to any one said time-reference class for the channel, by applying, to the part of the at least one equalization-related parameter Pe which depends on said time-reference class, the same variation as obtained for the part of the at least one equalization-related parameter Pe for said time-reference class with respect to another channel, wherein said another channel is selected by the equalization optimizer (300) according to at least one criterion of similarity between channels.

9. The method according to claim 8, wherein the method comprises:

   - filling in a first look-up table (Tc) with values of difference, referred to as $Dc_{x,y}$ between per-class contributions to the at least one channel-related parameter Pc of any channels $x$ and $y$, with $x \neq y$, among $N$ channels, wherein each value of difference $Dc_{x,y}$ is accompanied by its value of variance $V_{x,y}$; and wherein $Dc_{x,y}$ and $V_{x,y}$ are vectors having as many elements as there exists time-reference classes;
   - filling in a second look-up table (Te) with values of difference, referred to as $\Delta Pe$, between the value of the at least one equalization-related parameter Pe obtained for the corresponding contribution to the at least one channel-related parameter Pc and the value of the at least one equalization-related parameter Pe obtained for the preceding value corresponding contributions, wherein $\Delta Pe$ is a vector having also as many elements as there exists time-reference classes;
   - filling, for each channel among the $N$ channels, in a third look-up table (Ti[2]) by sorting, for each time-reference class, the vectors $Dc_{x,y}$ with $y \neq x$ in sequential order of a score that represents the similarity between channels and that takes into account the variance $V_{x,y}$ for said time-reference class.

10. The method according to any one of claims 1 to 9, wherein when the contribution value for one time-reference class to the at least one channel-related parameter Pc is below a predetermined threshold THc, the equalization optimizer (300) does not take into account said time-reference class when configuring or reconfiguring the transceiver optical device (111, 112) for the equalization-related operations.

11. The method according to any one of claims 1 to 10, wherein when the difference in contribution value for one class between two successive reviews of the contribution of said time-reference class to the at least one channel-related parameter Pc is below a predetermined threshold THd, the equalization optimizer (300) does not update the part of the at least one equalization-related parameter Pe which depends on the time-reference class in question.

12. The method according to any one of claims 1 to 11, wherein the equalization optimizer is located at a central point in an optical communications system (100), and wherein the aforementioned contributions values are used to perform pre-equalization at the central point end in downstream direction and post-equalization at the central point in upstream direction.

13. A computer program product comprising instructions causing implementation of the method according to any one of claims 1 to 12, when the instructions are executed by a processor.

14. An information storage medium storing instructions causing implementation of the method according to any one of claims 1 to 12, when the instructions are read from the information storage medium and executed by a processor.

15. An equalization optimizer (300) intended for configuring a transceiver optical device (111, 112) in terms of equalization-related operations with respect to optical signals transmitted via a channel of an optical line (121), the optical signals being subject during transmission over the channel to channel impairments having timescales of impact of said channel impairments on channel response of the channel which can be categorized into corresponding time-reference classes, the equalization optimizer (300) comprising electronic circuitry configured for:

   - performing (S401) an analysis of successive samples of at least one channel-related parameter $Pc$ related to said channel so as to determine a contribution value for each time-reference class among said time-reference classes, wherein the contribution value represents to what extent the channel impairments corresponding to the time-reference class in question contribute to said at least one channel-related parameter $Pc$;
   - determining (S402) a value of at least one equalization-related parameter $Pe$ according to the contribution values of the predetermined time-reference classes;
   - configuring (S403) the transceiver optical device (111, 112) for equalization-related operations with respect to the optical signals transmitted via the channel, using the determined value of the at least one equalization-related parameter;

   and wherein the electronic circuitry is further configured for:

   - reviewing (S404) the contribution value of each time-reference class at a rate of the timescale corresponding to the time-reference class in question, and updating (S406) accordingly the at least one equalization-related parameter $Pe$ so that a part thereof which depends on the time-reference class in question is only updated which leads to a per-class update, and
- reconfiguring (S407) the transceiver optical device (111, 112) for the equalization-related operations with respect to the optical signals transmitted via the channel, using the value of the at least one equalization-related parameter $Pe$ after the per-class update.

**Fig. 1**

**Fig. 2**

**Fig. 3**

S401 — Analyzing successive samples of at least one channel-related parameter Pc and determining per-class contributions

S402 — Determining a value of at least one equalization-related parameter Pe according to the per-class contributions

S403 — Configuring the transceiver optical device for equalization-related operations

S404 — Reviewing each per-class contribution at a rate of a timescale corresponding to the class in question

no — Contribution has changed ? — yes

S405

S406 — Updating partly the value of the at least one equalization-related parameter Pe

S407 — Reconfiguring the transceiver optical device for the equalization-related operations following update

**Fig. 4**

**Fig. 5**

Tc

| | 1 | 2 | ... | N-1 | N |
|---|---|---|---|---|---|
| 1 | ✕ | $Dc_{1,2}\ V_{1,2}$ | ... | $Dc_{1,N-1}\ V_{1,N-1}$ | $Dc_{1,N}\ V_{1,N}$ |
| 2 | $Dc_{2,1}\ V_{2,1}$ | ✕ | ... | $Dc_{2,N-1}\ V_{2,N-1}$ | $Dc_{2,N}\ V_{2,N}$ |
| ... | ... | ... | ✕ | ... | ... |
| N-1 | $Dc_{N-1,1}\ V_{N-1,1}$ | $Dc_{N-1,2}\ V_{N-1,2}$ | ... | ✕ | $Dc_{N-1,N}\ V_{N-1,N}$ |
| N | $Dc_{N,1}\ V_{N,1}$ | $Dc_{N,2}\ V_{N,2}$ | ... | $Dc_{N,N-1}\ V_{N,N-1}$ | ✕ |

**Fig. 6A**

Te

| 1 | 2 | ... | N-1 | N |
|---|---|---|---|---|
| $\Delta Pe[1]$ | $\Delta Pe[2]$ | ... | $\Delta Pe[N-1]$ | $\Delta Pe[N]$ |

**Fig. 6B**

Ti[2]

| | 1 | 2 | 3 | ... | N-1 |
|---|---|---|---|---|---|
| 1 | $Dc_{2,N-1}\ V_{2,N-1}$ | $Dc_{2,1}\ V_{2,1}$ | $Dc_{2,7}\ V_{2,7}$ | ... | $Dc_{2,3}\ V_{2,3}$ |
| 2 | $Dc_{2,N-1}\ V_{2,N-1}$ | $Dc_{2,1}\ V_{2,1}$ | $Dc_{2,7}\ V_{2,7}$ | ... | $Dc_{2,3}\ V_{2,3}$ |
| ... | ... | ... | ... | ... | ... |
| M | $Dc_{2,1}\ V_{2,1}$ | $Dc_{2,N-1}\ V_{2,N-1}$ | $Dc_{2,4}\ V_{2,4}$ | ... | $Dc_{2,3}\ V_{2,3}$ |

**Fig. 6C**

S701 — Receiving data to update tables Tc and Te

↓

S702 — Updating tables Tc et Te

↓

no ← Need to update any table Ti ? → yes

S703

↓

S704 — Selecting Ti[k] to be updated

↓

S705 — Selecting line *j* of Ti[k] to be updated

↓

S706 — Sorting éléments of line *j* of Ti[k]

↓

S707 — At least one other line to be updated? → yes

↓ no

At least one other table Ti to be updated? → yes

S708

↓ no

S709 — Using the tables Ti for channel inference

**Fig. 7A**

S751 — Detecting need for channel inference for time-reference $j$ with respect to channel $x$

S752 — Selecting line $j$ table Ti[$x$]

S753 — Retrieving from line $j$ of table Ti[$x$] adequate channel $y$ for channel inference

S754 — Retrieving from table Te the value $\Delta$Pe[$y$]

S755 — Updating in accordance the part of the at least one equalization-related parameter Pe which depends on the time-reference class $j$

## Fig. 7B

**Fig. 8**

S901 — Obtaining QoS target data

S902 — Adjusting margin and/or threshold in accordance

**Fig. 9**

CPU 1001   RAM 1002   ROM 1003   300

SD 1004   COM 1005   1010

**Fig. 10**

Europäisches
Patentamt

European
Patent Office

Office européen
des brevets

# EUROPEAN SEARCH REPORT

**Application Number**

EP 24 30 6577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/134687 A1 (ZTE CORP [CN]) 11 July 2019 (2019-07-11) | 1-5,7, 12,15 | INV. H04B10/61 H04B10/69 H04B10/2507 |
| A | * claim 1; figures 3, 5A * | 6,8-11, 13,14 | |
| | ----- | | |
| A | US 2020/366536 A1 (KANG HUN SIK [KR] ET AL) 19 November 2020 (2020-11-19) * paragraph [0121] - paragraph [0128]; figures 5-7 * | 1-15 | |
| | ----- | | |

**TECHNICAL FIELDS SEARCHED (IPC)**

H04B

The present search report has been drawn up for all claims

| Place of search | Date of completion of the search | Examiner |
|---|---|---|
| Munich | 28 February 2025 | Inan, Beril |

EPO FORM 1503 03.82 (P04C01)

## ANNEX TO THE EUROPEAN SEARCH REPORT
## ON EUROPEAN PATENT APPLICATION NO.

EP 24 30 6577

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | Publication date | Patent family member(s) | Publication date |
|---|---|---|---|
| WO 2019134687 A1 | 11-07-2019 | NONE | |
| US 2020366536 A1 | 19-11-2020 | KR 20200132497 A | 25-11-2020 |
| | | US 2020366536 A1 | 19-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Study on new radio access technology: Radio access architecture and interfaces. *3GPP TR 38.801 V 14.0.0*, March 2017